# EUROPÄISCHE PATENTSCHRIFT

(11) **EP 1 716 025 B1**
(45) Veröffentlichungstag und Bekanntmachung des Hinweises auf die Patenterteilung: **18.07.2012**
(21) Anmeldenummer: 05707317.3
(22) Anmeldetag: 10.02.2005
(51) Int. Cl.: B60R 22/46

(54) **ROTATIONSSTRAFFER MIT ANTRIEBSSTOPP**
ROTARY TIGHTENER COMPRISING A DRIVE STOP
TENDEUR EN ROTATION A BLOCAGE D'ENTRAINEMENT

(30) Priorität: 17.02.2004 DE 102004007852
(43) Veröffentlichungstag der Anmeldung: 02.11.2006
(73) Patentinhaber: AUTOLIV DEVELOPMENT AB, 447 83 Vargarda (SE)
(72) Erfinder: SCHNEIDER, Thomas, 25813 Husum (DE); HÖFS, Stefan, 25485 Bilsen (DE); LÖFFLER, Kai, 25421 Pinnenberg (DE); SCHMIDT, Martin, 25337 Elmshorn (DE); SCHMIDT, Thomas, 23669 Timmendorfer Strand (DE)
(74) Vertreter: Müller, Karl-Ernst
(86) Internationale Anmeldenummer: PCT/EP2005/001356
(87) Internationale Veröffentlichungsnummer: WO 2005/080150

(56) Entgegenhaltungen:
- WO-A-96/25310
- DE-A1- 10 119 199
- US-A- 4 442 674
- US-A- 5 881 962
- PATENT ABSTRACTS OF JAPAN Bd. 1999, Nr. 14, 22. Dezember 1999 (1999-12-22) & JP 11 255073 A (NIPPON SEIKO KK), 21. September 1999 (1999-09-21)

## Beschreibung

Die Erfindung betrifft einen Rotationsstraffer für einen Sicherheitsgurt, insbesondere in Kraftfahrzeugen, mit einem Gurtaufroller, dessen Gurtwelle bei Auslösung eines daran gekuppelten Strafferantriebs in Aufwickelrichtung des Sicherheitsgurtes gedreht wird, wobei der Gurtwelle als Antrieb ein Antriebsrad zugeordnet ist, welches auf seinem äußeren Umfang mit Ausnehmungen zur Aufnahme von aus einem tangential zum Antriebsrad angeordneten, wenigstens an einem Endabschnitt rohrförmig ausgebildeten Magazin der Reihe nach austretenden Massekörpern aufweist, wobei in dem Magazin ein pyrotechnisch angetriebener Antriebskolben für die Massekörper angeordnet ist.

### Stand der Technik

Ein Rotationsstraffer mit den vorgenannten Merkmalen ist in der DE 695 14 649 T2 entsprechend US 5 881 962 A beschrieben. Bei dem bekannten Rotationsstraffer ist das Magazin vollständig als ein in der Ebene des Antriebsrades gehäuseseitig ausgebildetes Rohr ausgeformt, welches in sich einen das Antriebsrad auf einen Teilumfang umschließenden Kanal ausbildet. In dem Kanal sind als Kugeln ausgebildete Massekörper in einer Reihe angeordnet, wobei an dem dem Antriebsrad zugeordneten Endabschnitt des Magazins gegenüberliegenden Ende der Massekörperreihe ein Antriebskolben angeordnet ist, der seinerseits von einem im Auslösefall von einer Gasquelle freigegebenen Druckgas beaufschlagt wird. Im Auslösefall treibt der Antriebskolben die Reihe von Massekörpern an, so dass die Massekörper aus dem Endbereich des rohrförmigen Magazins austreten und in die Ausnehmungen des Antriebsrades eintreten, so dass hierdurch das Antriebsrad in Drehung versetzt wird.

Bei dem bekannten Rotationsstraffer besteht das Problem, dass am Ende des Antriebsvorganges alle Massekörper einschließlich des gegebenenfalls vorgesehenen Antriebskolbens vollständig aus dem rohrförmigen Endabschnitt des Magazins austreten, so dass der in diesem anstehende Gasdruck sich schlagartig in Form einer Druckwelle in die Umgebung entlädt. Diese Druckfreisetzung kann zu einem lauten Knall und einer unerwünschten, schlagartigen Freisetzung heißer Brandgase führen.

### Aufgabenstellung

Der Erfindung liegt die Aufgabe zugrunde, einen Rotationsstraffer mit den gattungsgemäßen Merkmalen derart weiterzubilden, dass am Ende des Straffvorganges keine Freisetzung einer Druckwelle in die Umgebung und damit keine unerwünschte Geräuschentwicklung bzw. kein Freisetzen von Brandgasen erfolgt.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass Mittel zum Verhindern eines vollständigen Austritts der Massekörper und/oder des Antriebskolbens aus dem vor dem Antriebsrad gelegenen rohrförmigen Endabschnitt des Magazins am Ende der Antriebsbewegung und zum dadurch gegebenen Verschließen des Endabschnittes und zur Verhinderung eines Austritts von heißen Gasen aus dem Endabschnitt vorgesehen sind. Mit der Erfindung ist der Vorteil verbunden, dass am Ende des Antriebsvorganges der rohrförmige Endabschnitt des selbst als Rohr oder aber auch in einer anderen Form ausgebildeten Magazins durch entweder den in dem Endabschnitt gehaltenen Antriebskolben oder aber durch einen dem Antriebskolben in Bewegungsrichtung vorgelagerten Massekörper verschlossen gehalten wird, indem die dafür eingerichteten Mittel das Austreten des betreffenden Massekörpers bzw. des Antriebskolbens aus dem rohrförmigen Endabschnitt des Magazins verhindern. Auf diese Weise kann sich der in dem Magazin bzw. in dem rohförmigen Endabschnitt anstehende Gasdruck nicht in den Gurtaufroller hinein entladen.

Nach einem Ausführungsbeispiel der Erfindung ist vorgesehen, dass der Antriebskolben mittels einer seinen Kolbenweg beschränkenden Fangvorrichtung in dem rohrförmigen Endabschnitt festlegbar ist, wobei nach alternativen Ausführungsformen der Erfindung die Fangvorrichtung entweder aus einem an dem Antriebskolben angeschlagenen Fangband oder aus einer an dem Antriebskolben angeschlagenen Spiralfeder besteht.

Gemäß einer weiteren Ausführungsform der Erfindung ist vorgesehen, dass der rohrförmige Endabschnitt an seinem Ende eine Verjüngung auf einen dem Durchmesser der zum Austritt aus dem Endabschnitt vorgesehenen Massekörper entsprechenden Querschnitt aufweist und der Antriebskolben und/oder wenigstens ein vor dem Antriebskolben durch den rohrförmigen Endabschnitt bewegter Massekörper einen größeren Querschnitt als die in dem rohrförmigen Endabschnitt ausgebildete Verjüngung aufweist; hierbei wird durch entsprechenden Formschluss der Austritt des letzten, vor dem Antriebskolben befindlichen Massekörpers bzw. des Antriebskolbens selbst aus dem Endabschnitt des Magazins verhindert.

In einer weiteren Ausführungsform ist vorgesehen, dass auf dem Antriebskolben und/oder wenigstens einem vor dem Antriebskolben durch den rohrförmigen Endabschnitt bewegten Massekörper ein Federelement angeordnet ist, welches beim Durchgang mit einer im Bereich des rohrförmigen Endabschnitts ausgebildeten Nut verrastet.

Es kann vorgesehen sein, dass am Ende des rohrförmigen Endabschnitts ein in Abhängigkeit von einer vorbestimmten Anzahl von aus dem Endabschnitt ausgetretenen Massekörpern in den Weg der Massekörper im Endabschnitt eingesteuerter Schieber zur Verhinderung eines weiteren Austritts von Massekörpern und/oder des Antriebskolbens vorgesehen ist.

Alternativ kann vorgesehen sein, dass in Bewegungsrichtung der Massekörper über das Antriebsrad hinter dem Antriebsrad eine Rohrverlängerung zur Aufnahme der über das Antriebsrad geführten Massekörper angeordnet und in seiner Länge auf die Anzahl der in ihm aufgenommenen Massekörper derart abgestimmt ist, dass am Ende des Antriebsvorganges wenigstens ein Massekörper und/oder der Antriebskolben in dem vor dem Antriebsrad gelegenen Endabschnitt verbleiben.

In einer weiteren Ausführungsform schlägt die Erfindung vor, dass die Anzahl der magazinierten Massekörper auf die Anzahl der Ausnehmungen im Antriebsrad abgestimmt ist derart, dass am Ende des Antriebsvorganges wenigstens ein aus dem Endabschnitt austretender Massekörper auf einen in einer Ausnehmung des Antriebsrades befindlichen Massekörper trifft und dadurch die weitere Drehung des Antriebsrades blockiert.

Es kann vorgesehen sein, dass der Antriebskolben die Form zweier miteinander verbundener Massekörper aufweist und der Antriebskolben bei Eintritt in das Antriebsrad die weitere Drehung des Antriebsrades derart blockiert, dass ein Teil des Antriebskolbens in dem rohrförmigen Abschnitt verbleibt und diesen verschließt; ein vergleichbarer Lösungsvorschlag ergibt sich daraus, dass ein in dem Magazin vor dem Antriebskolben positionierter Massekörper die Form zweier miteinander verbundener Massekörper aufweist und dieser Massekörper bei Eintritt in das Antriebsrad die weitere Drehung des Antriebsrades derart blockiert, dass der Antriebskolben in dem rohrförmigen Endabschnitt verbleibt und diesen verschließt.

In der Zeichnung sind Ausführungsbeispiele der Erfindung wiedergegeben, welche nachstehend beschrieben sind. Es zeigen:
- Fig. 1: in einer schematischen Ansicht den Antrieb eines Gurtstraffers mit Magazin, Massekörpern und Antriebsrad,
- Fig. 2: den Antrieb gemäß Figur 2 in einer anderen Ausführungsform,
- Fig. 3: den Gegenstand der Figur 1 in einer weiteren Ausführungsform,
- Fig. 4: den Gegenstand der Figur 1 in einer abgewandelten Ausführungsform,
- Fig. 5: den Gegenstand der Figur 1 in einer weiterhin abgewandelten Ausführungsform,
- Fig. 6: den Gegenstand der Figur 1 in einer alternativen Ausführungsform,
- Fig. 7: den Gegenstand der Figur 1 in einer weiteren Alternative.

Soweit die Erfindung nachstehend anhand der Zeichnung erläutert ist, beschränkt sich die zeichnerische Darstellung auf die schematische Wiedergabe des Antriebes mit dem an die Gurtwelle zu koppelnden Antriebsrad und der Magazinierung der über das Antriebsrad im Auslösefall zu führenden Massekörper.

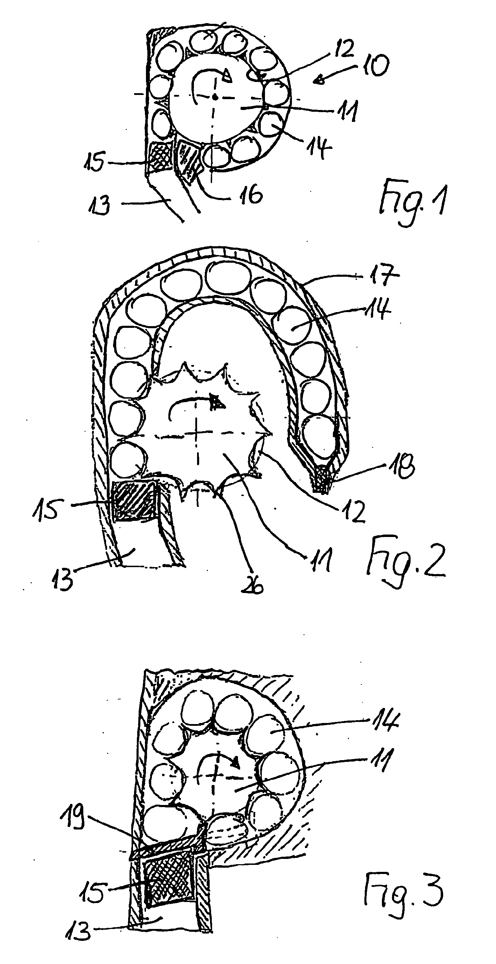

Gemäß Figur 1 besteht der Antrieb 10 für einen Gurtstraffer aus einem Antriebsrad 11, auf dessen äußeren Umfang Ausnehmungen 12 angeordnet sind, die zur Aufnahme von über das Antriebsrad 11 geführten Massekörpern 14, im vorliegenden Fall von Kugeln, eingerichtet sind. Dem Antriebsrad ist ein in seiner vollen Ausdehnung in Figur 1 nicht dargestelltes Magazin zugeordnet, in welchem die über das Antriebsrad 11 im Auslösefall zu leitenden Massekörper 14 bevorratet sind. In Figur 1 ist der diesbezügliche, an das Antriebrad 11 anschließende Endabschnitt 13 des rohrförmigen Magazins dargestellt. In dem Magazin und damit auch im Bereich des Endabschnitts 13 ist ein Antriebskolben bewegbar, der an dem dem Antriebrad 11 abgewandten Ende der in dem Magazin angeordneten Reihe von Massekörpern 14 angeordnet und im Auslösefall von einem pyrotechnisch erzeugten Treibgas beaufschlagt ist, so dass der Antriebskolben 15 bei seiner Bewegung durch das Magazin die Massekörper-Reihe vor sich herschiebt und die Massekörper 14 in die Ausnehmungen 12 des Antriebsrades 11 eintreten lässt. Die spezifische Antriebsbewegung ist in der gattungsbildenden DE 695 14 649 T2 hinreichend beschrieben, so dass hierauf Bezug genommen ist.

In Figur 1 ist die Stellung des Antriebes 10 am Ende der Antriebsbewegung dargestellt, in welcher dafür Sorge getragen sein soll, dass der rohrförmige Endabschnitt 13 des nicht weiter dargestellten Magazins durch den Antriebskolben 15 bzw. wenigstens einen Massekörper 14 verschlossen bleiben soll, damit sich die in dem Magazin anstehenden heißen Brandgase nicht in die Umgebung des Antriebes 10 entladen.

Bei dem in Figur 1 dargestellten Ausführungsbeispiel reicht ein Stopper 16 in den Umfang des von den in den Ausnehmungen des Antriebrades 11 liegenden Massekörpern 14 durchschrittenen Weges derart hinein, dass beim Auftreffen des vordersten Massekörpers 14 auf den Stopper 15 die weitere Drehbewegung des Antriebsrades 11 gestoppt wird; in dieser Stellung ist der Antriebskolben 15 noch nicht aus dem rohrförmigen Endabschnitt 13 ausgetreten und hält somit den Endabschnitt 13 verschlossen.

Bei dem in Figur 2 dargestellten Ausführungsbeispiel bewegen sich die in die Ausnehmungen 12 des Antriebsrades 11 eintretenden Massekörper 14 nicht über den gesamten Umfang des Antriebsrades 11 mit dem Antriebsrad 11 mit, sondern treiben das Antriebsrad 11 im wesentlichen tangential an; insofern ist in Richtung der Drehbewegung des Antriebsrades 11 dem Antriebsrad 11 nachgeordnet eine Rohrverlängerung 17 vorgesehen, in welche die Massekörper 14 nach ihrem Durchlauf durch das Antriebsrad eintreten und von der Rohrverlängerung 17 aufgenommen werden. Die Länge der Rohrverlängerung 17 ist dabei auf die Anzahl der in ihr aufgenommenen Massekörper 14 derart abgestimmt, dass am Ende des Antriebsvorganges wenigstens der Antriebskolben 15 in dem vor dem Antriebsrad 11 gelegenen rohrförmigen Endabschnitt 13 verbleibt und diesen verschließt. Hierzu ist am Ende der Rohrverlängerung 17 ein Stoppelement 18 eingesetzt, welches die weitere Bewegung der Massekörper 14 in der Rohrverlängerung 17 verhindert.

Bei dem in Figur 3 dargestellten Ausführungsbeispiel ist dem rohrförmigen Endabschnitt 13 ein Schieber 19 zugeordnet, der vor dem Austritt des Antriebskolbens 15 aus dem rohrförmigen Endabschnitt 13 in die Bewegungsbahn des Antriebskolbens 15 hineingeschoben wird, so dass der Antriebskolben 15 im rohrförmigen Endabschnitt 13 verbleibt und diesen verschließt. Dabei ist in zweckmäßiger Weise der Schieber 19 derart angeordnet, dass die Betätigung des Schiebers 19 durch den vordersten, mit dem Antriebsrad 11 umlaufenden Massekörper erfolgt.

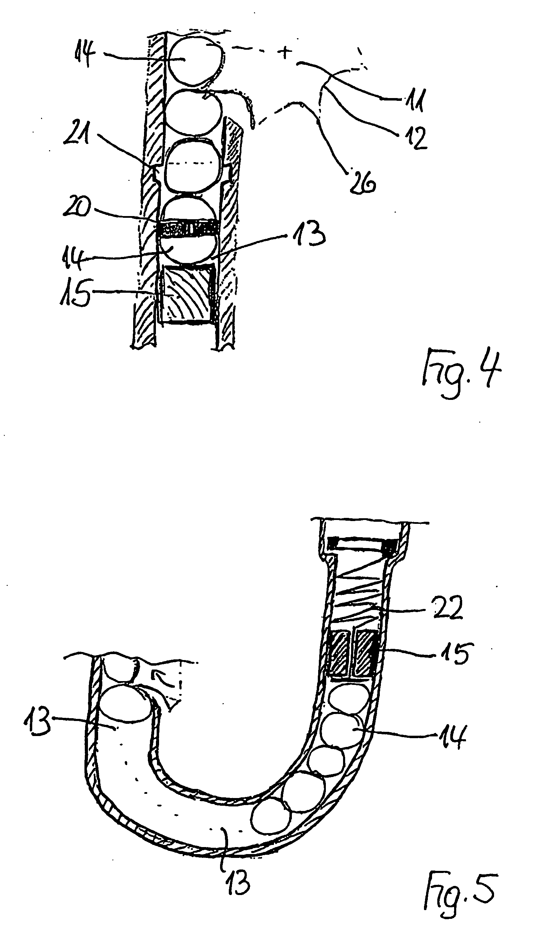

Bei dem in Figur 4 dargestellten Ausführungsbeispiel ist auf dem in Bewegungsrichtung des Antriebskolbens 15 vor diesem als letzten angeordneten Massekörper 14 ein Federelement in Form eines Sprengringes 20 angeordnet, wobei sich am Ende des rohrförmigen Endabschnitts 13 eine Nut 21 zur Aufnahme des Federelementes 20 befindet. Beim Durchgang des mit dem Federelement 20 versehenen Massekörpers 14 springt das Federelement 20 in die Nut 21 ein und legt den Massekörper im rohrförmigen Endabschnitt 13 fest; auf diese Weise wird auch der Antriebskolben 15 im rohrförmigen Endabschnitt 13 gehalten und verschließt diesen.

Bei dem in Figur 5 dargestellten Ausführungsbeispiel ist der Antriebskolben 15 mittels einer seinen Kolbenweg beschränkenden Fangvorrichtung in Form einer Spiralfeder 22 festgehalten. Erreicht der Antriebskolben 15 seine Endstellung kurz vor Austritt aus dem rohrförmigen Endabschnitt 13, so ist die Spiralfeder 22 gestrafft bzw. gespannt und hält den Antriebskolben im Inneren des Endabschnitts 13 fest.

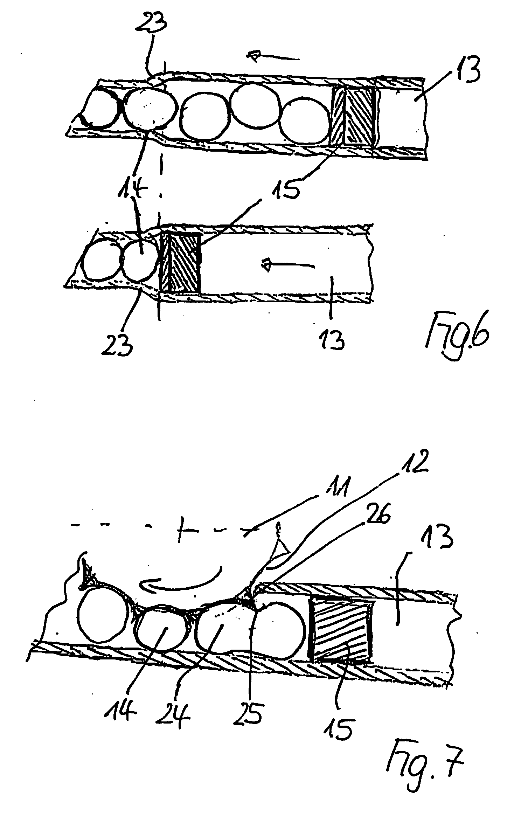

Bei dem in Figur 6 dargestellten Ausführungsbeispiel ist im Bereich des rohrförmigen Endabschnitts 13 eine Querschnittsänderung in Form einer Verjüngung 23 ausgebildet, wobei der Durchmesser der Verjüngung 23 dem Durchmesser der zum Austritt aus dem Endabschnitt 13 vorgesehenen Massekörper 14 entspricht; der Antriebskolben 15 weist allerdings einen größeren Durchmesser auf, so dass er die Verjüngung 23 des Endabschnitts 13 nicht passieren kann und an der Verjüngung 23 festgelegt ist; es versteht sich, dass in dem von dem Antriebskolben 15 durchschrittenen Weg der Endabschnitt 13 bzw. das Magazin einen dem Durchmesser des Antriebskolbens 15 entsprechenden Durchmesser aufzuweisen hat.

Bei dem in Figur 7 dargestellten Ausführungsbeispiel schließlich weist der letzte, in Bewegungsrichtung vor dem Antriebskolben 15 positionierte Massekörper 24 die Form zweier miteinander über einen Steg 25 verbundener Massekörper auf, und bei Eintritt dieses Massekörper 24 in das Antriebsrad 11 läuft die die Ausnehmungen trennende Ritzelverzahnung 26 des Antriebsrades 11 auf den Steg 25 des betreffenden Massekörpers 24 auf, so dass die weitere Drehbewegung des Antriebsrades 11 gehemmt ist; somit verbleibt der auf dem Massekörper 24 folgende Antriebskolben 15 in dem rohrförmigen Endabschnitt 13 und verschließt diesen.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Rotationsstraffer für einen Sicherheitsgurt, insbesondere in Kraftfahrzeugen, mit einem Gurtaufroller, dessen Gurtwelle bei Auslösung eines daran gekuppelten Strafferantriebs (10) in Aufwickelrichtung des Sicherheitsgurtes gedreht wird, wobei der Gurtwelle als Antrieb (10) ein Antriebsrad (11) zugeordnet ist, welches auf seinem äußeren Umfang mit Ausnehmungen (12) zur Aufnahme von aus einem tangential zum Antriebsrad (11) angeordneten, wenigstens an einem Endabschnitt rohrförmig ausgebildeten Magazin der Reihe nach austretenden Massekörpern (14) aufweist, wobei in dem Magazin ein pyrotechnisch angetriebener Antriebskolben (15) für die Massekörper (14) angeordnet ist, **dadurch gekennzeichnet, dass** Mittel (16, 18, 19, 20, 21, 22, 23, 24) zum Verhindern eines vollständigen Austritts der Massekörper (14) und/oder des Antriebskolbens (15) aus dem vor dem Antriebsrad (11) gelegenen rohrförmigen Endabschnitt (13) des Magazins am Ende der Antriebsbewegung, zum dadurch gegebenen Verschließen des rohrförmigen Endabschnittes (13) und zur Verhinderung eines Austritts von heißen Gasen aus dem rohrförmigen Endabschnitt (13) vorgesehen sind.

2. Rotationsstraffer nach Anspruch 1, **dadurch gekennzeichnet, dass** der Antriebskolben (15) mittels einer seinen Kolbenweg beschränkenden Fangvorrichtung (22) in dem rohrförmigen Endabschnitt (13) festlegbar ist.

3. Rotationsstraffer nach Anspruch 2, **dadurch gekennzeichnet, dass** die Fangvorrichtung aus einem an dem Antriebskolben (15) angeschlagenen Fangband besteht.

4. Rotationsstraffer nach Anspruch 2, **dadurch gekennzeichnet, dass** die Fangvorrichtung aus einer an dem Antriebskolben (15) angeschlagenen Spiralfeder (22) besteht.

5. Rotationsstraffer nach Anspruch 1, **dadurch gekennzeichnet, dass** der rohrförmige Endabschnitt (13) an seinem Ende eine Verjüngung (23) auf einen dem Durchmesser der zum Austritt aus dem Endabschnitt (13) vorgesehenen Massekörper (14) entsprechenden Querschnitt aufweist und der Antriebskolben (15) und/oder wenigstens ein vor dem Antriebskolben (15) durch den rohrförmigen Endabschnitt (13) bewegter Massekörper (14) einen größeren Querschnitt als die in dem rohrförmigen Endabschnitt (13) ausgebildete Verjüngung (23) aufweist.

6. Rotationsstraffer nach Anspruch 1, **dadurch gekennzeichnet, dass** auf dem Antriebskolben (15) und/oder wenigstens einem vor dem Antriebskolben (15) durch den rohrförmigen Endabschnitt (13) bewegten Massekörper (14) ein Federelement (20) angeordnet ist, welches beim Durchgang mit einer im Bereich des rohrförmigen Endabschnitts (13) ausgebildeten Nut (21) verrastet.

7. Rotationsstraffer nach Anspruch 1, **dadurch gekennzeichnet, dass** am Ende des rohrförmigen Endabschnitts (13) ein in Abhängigkeit von einer vorbestimmten Anzahl von aus dem Endabschnitt (13) ausgetretenen Massekörpern (14) in den Weg der Massekörper (14) im Endabschnitt (13) eingesteuerter Schieber (19) zur Verhinderung eines weiteren Austritts von Massekörpern (14) und/oder des Antriebskolbens (15) vorgesehen ist.

8. Rotationsstraffer nach Anspruch 1, **dadurch gekennzeichnet, dass** in Bewegungsrichtung der Massekörper (14) über das Antriebsrad (11) hinter dem Antriebsrad (11) eine Rohrverlängerung (17) zur Aufnahme der über das Antriebsrad (11) geführten Massekörper (14) angeordnet und in seiner Länge auf die Anzahl der in ihm aufgenommenen Massekörper derart abgestimmt ist, dass am Ende des Antriebsvorganges wenigstens ein Massekörper (14) und/oder der Antriebskolben (15) in dem vor dem Antriebsrad (11) gelegenen Endabschnitt (13) verbleiben.

9. Rotationsstraffer nach Anspruch 1, **dadurch gekennzeichnet, dass** die Anzahl der magazinierten Massekörper (14) auf die Anzahl der Ausnehmungen (12) im Antriebsrad (11) abgestimmt ist derart, dass am Ende des Antriebsvorganges wenigstens ein aus dem Endabschnitt (13) austretender Massekörper (14) auf einen in einer Ausnehmung (12) des Antriebsrades (11) befindlichen Massekörper (14) trifft und dadurch die weitere Drehung des Antriebsrades (11) blockiert.

10. Rotationsstraffer nach Anspruch 1, **dadurch gekennzeichnet, dass** der Antriebskolben (15) die Form zweier miteinander verbundener Massekörper aufweist und der Antriebskolben (15) bei Eintritt in das Antriebsrad (11) die weitere Drehung des Antriebsrades (11) derart blockiert, dass ein Teil des Antriebskolbens (15) in dem rohrförmigen Abschnitt (13) verbleibt und diesen verschließt.

11. Rotationsstraffer nach Anspruch 1, **dadurch gekennzeichnet, dass** ein in dem Magazin vor dem Antriebskolben (15) positionierter Massekörper (24) die Form zweier miteinander verbundener Massekörper (24) aufweist und dieser Massekörper bei Eintritt in das Antriebsrad (11) die weitere Drehung des Antriebsrades (11) derart blockiert, dass der Antriebskolben (15) in dem rohrförmigen Endabschnitt (13) verbleibt und diesen verschließt.

## Claims

1. A rotary tightener for a safety belt, in particular in motor vehicles, with a belt retractor, the belt shaft of which on activation of a tightener drive (10) which is coupled thereto is rotated in the winding direction of the safety belt, wherein as a drive (10) a drive wheel (11) is associated with the belt shaft, which drive wheel is provided on its outer periphery with recesses (12) for accommodating mass bodies (14) that emerge one after another from a magazine which is disposed tangential to the drive wheel (11) and is embodied in a tubular fashion at least in one final section, wherein a pyrotechnically driven drive piston (15) for the mass bodies (14) is arranged in the magazine, **characterized in that** means (16, 18, 19, 20, 21, 22, 23, 24) are provided for preventing the mass bodies (14) and/or the drive piston (15) from fully emerging from the tubular final section (13) of the magazine, situated in front of the drive wheel (11), at the end of the driving movement, for the closing, provided thereby, of the tubular final section (13) and for preventing an emergence of hot gases from the tubular final section (13).

2. The rotary tightener according to Claim 1, **characterized in that** the drive piston (15) is able to be fixed in the tubular final section (13) by means of an arrestor (22) limiting its piston stroke.

3. The rotary tightener according to Claim 2, **characterized in that** the arrestor consists of a rebound strap attached to the drive piston (15).

4. The rotary tightener according to Claim 2, **characterized in that** the arrestor consists of a spiral spring (22) attached to the drive piston (15).

5. The rotary tightener according to Claim 1, **characterized in that** the tubular final section (13) has at its end a taper (23) to a cross-section corresponding to the diameter of the mass bodies (14) provided for the emergence from the final section (13), and the drive piston (15) and/or at least one mass body (14) moved in front of the drive piston (15) through the tubular final section (13) has a greater cross-section than the taper (23) which is formed in the tubular final section (13).

6. The rotary tightener according to Claim 1, **characterized in that** on the drive piston (15) and/or on at least one mass body (14) moved in front of the drive piston (15) through the tubular final section (13) a spring element (20) is arranged, which on passage engages with a groove (21) formed in the region of the tubular final section (13).

7. The rotary tightener according to Claim 1, **characterized in that** at the end of the tubular final section (13) a slider (19) is provided for preventing a further emergence of mass bodies (14) and/or of the drive piston (15), said slider being actuated as a function of a predetermined number of mass bodies (14) emerged from the final section (13) into the path of the mass bodies (14) in the final section (13).

8. The rotary tightener according to Claim 1, **characterized in that** in the direction of movement of the mass bodies (14), via the drive wheel (11), behind the drive wheel (11) a tube extension (17) is arranged to receive the mass bodies (14) guided via the drive wheel (11), and is coordinated in its length to the number of mass bodies received in it, such that at the end of the drive process at least one mass body (14) and/or the drive piston (15) remain in the final section (13) situated in front of the drive wheel (11).

9. The rotary tightener according to claim 1, **characterized in that** the number of the stored mass bodies (14) is coordinated to the number of recesses (12) in the drive wheel (11), such that at the end of the drive process at least one mass body (14) emerging from the final section (13) impacts onto a mass body (14) situated in a recess (12) of the drive wheel (11) and thereby blocks the further rotation of the drive wheel (11).

10. The rotary tightener according to Claim 1, **characterized in that** the drive piston (15) has the shape of two mass bodies connected with one another, and the drive piston (15) on entry into the drive wheel (11) blocks the further rotation of the drive wheel (11) such that a portion of the drive piston (15) remains in the tubular section (13) and closes the latter.

11. The rotary tightener according to Claim 1, **characterized in that** a mass body (24) positioned in the magazine in front of the drive piston (15) has the form of two mass bodies (24) connected with one another, and this mass body on entry into the drive wheel (11) blocks the further rotation of the drive wheel (11) such that the drive piston (15) remains in the tubular final section (13) and closes the latter.

## Revendications

1. Tendeur rotatif pour une ceinture de sécurité, en particulier sur des véhicules automobiles, comprenant un enrouleur de sangle, dont l'arbre de sangle est tourné dans le sens d'enroulement de la ceinture de sécurité en cas de déclenchement d'un entraînement de tendeur (10) couplé à cet arbre, une roue d'entraînement (11) étant attribuée à l'arbre de sangle comme entraînement (10), laquelle roue présente sur son pourtour extérieur des évidements (12) pour le logement de corps de masse (14) sortant successivement d'un magasin disposé tangentiellement à la roue d'entraînement (11), conçu en forme de tube au moins sur une partie d'extrémité, un piston d'entraînement (15) entraîné de façon pyrotechnique étant disposé dans le magasin pour les corps de masse (14), **caractérisé en ce que** des moyens (16, 18, 19, 20, 21, 22, 23, 24) sont prévus pour empêcher une sortie complète des corps de masse (14) et/ou du piston d'entraînement (15) de la partie d'extrémité (13), en forme de tube, située en amont de la roue d'entraînement (11), du magasin à la fin du mouvement d'entraînement, pour la fermeture ainsi obtenue de la partie d'extrémité (13) tubulaire et pour empêcher une sortie de gaz chauds de la partie d'extrémité (13) tubulaire.

2. Tendeur rotatif selon la revendication 1, **caractérisé en ce que** le piston d'entraînement (15) peut être fixé dans la partie d'extrémité (13) tubulaire au moyen d'un dispositif d'interception (22) limitant sa course de piston.

3. Tendeur rotatif selon la revendication 2, **caractérisé en ce que** le dispositif d'interception est constitué d'une bande d'interception accrochée sur le piston d'entraînement (15).

4. Tendeur rotatif selon la revendication 2, **caractérisé en ce que** le dispositif d'interception est constitué d'un ressort en spirale (22) accroché sur le piston d'entraînement (15).

5. Tendeur rotatif selon la revendication 1, **caractérisé en ce que** la partie d'extrémité (13) tubulaire présente sur son extrémité un rétrécissement (23) sur une section correspondant au diamètre des corps de masse (14) prévus pour la sortie de la partie d'extrémité (13) et le piston d'entraînement (15) et/ou au moins un corps de masse (14) déplacé en amont du piston d'entraînement (15) à travers la partie d'extrémité (13) tubulaire présente une section supérieure au rétrécissement (23) formé dans la partie d'extrémité (13) tubulaire.

6. Tendeur rotatif selon la revendication 1, **caractérisé en ce qu'**un élément de ressort (20), qui s'enclenche lors du passage avec une rainure (21) formée dans la zone de la partie d'extrémité (13) tubulaire, est disposé sur le piston d'entraînement (15) et/ou au moins un corps de masse (14) déplacé en amont du piston d'entraînement (15) à travers la partie d'extrémité (13) tubulaire.

7. Tendeur rotatif selon la revendication 1, **caractérisé en ce que** sur l'extrémité de la partie d'extrémité (13) tubulaire est prévu un coulisseau (19) intégré dans la course des corps de masse (14) dans la partie d'extrémité (13) en fonction d'un nombre prédéfini de corps de masse (14) sortis de la partie d'extrémité (13) pour empêcher une nouvelle sortie de corps de masse (14) et/ou du piston d'entraînement (15).

8. Tendeur rotatif selon la revendication 1, **caractérisé en ce qu'**un prolongement de tube (17) est disposé dans le sens de déplacement des corps de masse (14) via la roue d'entraînement (11) en aval de la roue d'entraînement (11) pour le logement des corps de masse (14) guidés par la roue d'entraînement (11) et est adapté dans sa longueur au nombre des corps de masse réceptionnés dans celui-ci, de telle sorte que, à la fin du processus d'entraînement, au moins un corps de masse (14) et/ou le piston d'entraînement (15) restent dans la partie d'extrémité (13) située en amont de la roue d'entraînement (11).

9. Tendeur rotatif selon la revendication 1, **caractérisé en ce que** le nombre des corps de masse (14) placés dans le magasin est adapté au nombre des évidements (12) dans la roue d'entraînement (11), de telle sorte que, à la fin du processus d'entraînement, au moins un corps de masse (14) sortant de la partie d'extrémité (13) rencontre un corps de masse (14) se trouvant dans un évidement (12) de la roue d'entraînement (11) et bloque ainsi la rotation ultérieure de la roue d'entraînement (11).

10. Tendeur rotatif selon la revendication 1, **caractérisé en ce que** le piston d'entraînement (15) présente la forme de deux corps de masse reliés l'un à l'autre et le piston d'entraînement (15) bloque la rotation ultérieure de la roue d'entraînement (11) à l'entrée dans la roue d'entraînement (11), de telle sorte qu'une partie du piston d'entraînement (15) reste dans la partie (13) tubulaire et ferme celle-ci.

11. Tendeur rotatif selon la revendication 1, **caractérisé en ce qu'**un corps de masse (24) positionné dans le magasin en amont du piston d'entraînement (15) présente la forme de deux corps de masse (24) reliés l'un à l'autre et ce corps de masse bloque la rotation ultérieure de la roue d'entraînement (11) à l'entrée dans la roue d'entraînement (11), de telle sorte que le piston d'entraînement (15) reste dans la partie d'extrémité (13) tubulaire et ferme celle-ci.
